# EUROPÄISCHE PATENTSCHRIFT

(11) **EP 0 675 301 B1**
(45) Veröffentlichungstag und Bekanntmachung des Hinweises auf die Patenterteilung: **11.06.1997**
(21) Anmeldenummer: 95103880.1
(22) Anmeldetag: 16.03.1995
(51) Int. Cl.: F16H 57/02, B61C 9/48

(54) **Getriebegehäuse**
Gearbox
Carter de transmission

(30) Priorität: 29.03.1994 DE 4410957
(43) Veröffentlichungstag der Anmeldung: 04.10.1995
(73) Patentinhaber: SIEMENS AKTIENGESELLSCHAFT, 80333 München (DE)
(72) Erfinder: Pfannschmidt, Bernd, Dipl.-Ing. (FH), D-90574 Rosstal (DE)

(56) Entgegenhaltungen:
- EP-A- 0 542 171
- DE-A- 2 233 697
- DE-U- 9 406 702
- FR-A- 969 410

## Beschreibung

Die Erfindung betrifft ein Getriebegehäuse, das zwei Gehäuseteile umfaßt und am Lagerschild eines Antriebsmotors eines Schienenfahrzeugs befestigt ist, wobei im Getriebegehäuse, das eine Radachse umschließt, wenigstens ein Großrad drehbar gelagert ist.

Eine derartige Antriebseinheit ist aus der EP-A-0 542 171 bekannt. Im bekannten Fall ist das Großrad auf einer Hohlwelle fest angeordnet, die in Stützlagern abgestützt und drehbar im Getriebegehäuse gelagert ist und wobei die Hohlwelle an einem Ende einen Flansch zur Befestigung einer Kupplung aufweist, mittels welcher die Verbindung zum die Radachse aufweisenden Radsatz hergestellt wird.

Aus der DE-A-22 33 697 ist ein Getriebekasten mit Tauchschmierung und einer waagerecht verlaufenden Teilfuge für ein Stirnrädergetriebe eines Antriebes von Schienenfahrzeugen bekannt, in dem das Ritzel und das Großrad gelagert sind, derart, daß die Seitenwände des Getriebekastens, deren Abstand zueinander größer als die Länge der Nabe des Großrades ist, jeweils konzentrisch zur Welle des Ritzels und zur Welle des Großrades liegende, kreisförmige Aussparungen enthalten, in die einteilige Ringkörper mit den Lagern des Ritzels bzw. des Großrades eingesetzt sind, und wobei die Teilfuge außerhalb der Lagerung des Großrades und des Ritzels verläuft.

Ferner ist aus der DE-U-94 06 702 ein Antriebsaggregat mit Motor und mehrteiligem Getriebegehäuse bekannt, wobei eine Trennfuge des Getriebegehäuses im Bereich des Zahneingriffs zwischen einem Ritzel der Motorwelle und einem Großrad der Abtriebswelle liegt.

Schließlich ist aus der FR-A-969 410 eine Antriebseinheit für ein Schienenfahrzeug bekannt, dessen Getriebegehäuse durch Lager auf einem zylindrischen Lagerbock des Motors gelagert und über eine Aufhängung und Drehmomentabstützung am Fahrzeugrahmen befestigt ist. Das Getriebegehäuse weist eine senkrecht zur Radachse sowie zur Motorwelle und parallel zu einem Großrad des Getriebes verlaufende, das Getriebegehäuse teilende Trennfuge auf. Durch eine horizontal verlaufende zweite Teilfuge ist die motorabgewandte Getriebegehäuseschale in eine obere und eine untere Halbschale unterteilt. Auf einer buchsenförmigen Anformung des Getriebegehäuses sind Lager vorgesehen, auf denen das Großrad gelagert ist, das vom Ritzel der Motorwelle angetrieben wird und das über Kupplungselemente das Treibrad der Radachse des Fahrzeugs antreibt.

Aufgabe der vorliegenden Erfindung ist es, ein Getriebegehäuse der eingangs genannten Art zu schaffen, das über seine gesamte Lebensdauer seine Stabilität und Dichtigkeit behält.

Die Aufgabe wird erfindungsgemäß durch die im Anspruch 1 aufgeführten Merkmale gelöst.

Bei dem Getriebegehäuse nach der Erfindung ist der Großradträger im Getriebegehäuse einsetzbar und verdrehsicher gehalten. Der Aufbau des Getriebegehäuses erlaubt eine genaue Justierung und eine einfache Montage des vormontierten Großradträgers im Getriebegehäuse. Damit läßt sich die Trennfuge in einen Bereich verlegen, der im Hinblick auf Gehäuseundichtigkeiten unkritischer ist.

Weitere Vorteile und Einzelheiten der Erfindung ergeben sich aus der nachfolgenden Beschreibung von drei Ausführungsbeispielen anhand der Zeichnung und in Verbindung mit den Ansprüchen 2 bis 5. Es zeigen:
- FIG 1: eine erste Ausführungsform des Getriebegehäuses im Längsschnitt,
- FIG 2: eine Seitenansicht des Getriebegehäuses nach FIG 1,
- FIG 3: eine zweite Ausführungsform des Getriebegehäuses in Seitenansicht,
- FIG 4: eine dritte Ausführungsform des Getriebegehäuses in Seitenansicht,
- FIG 5: eine Draufsicht auf das Getriebegehäuse nach FIG 2,
- FIG 6: eine Draufsicht auf das Getriebegehäuse nach FIG 4.

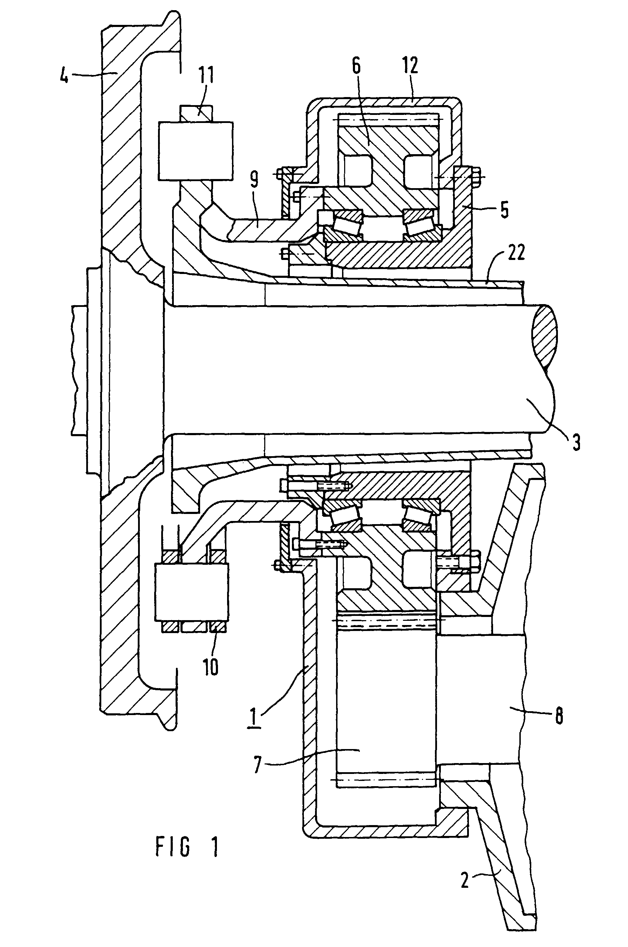

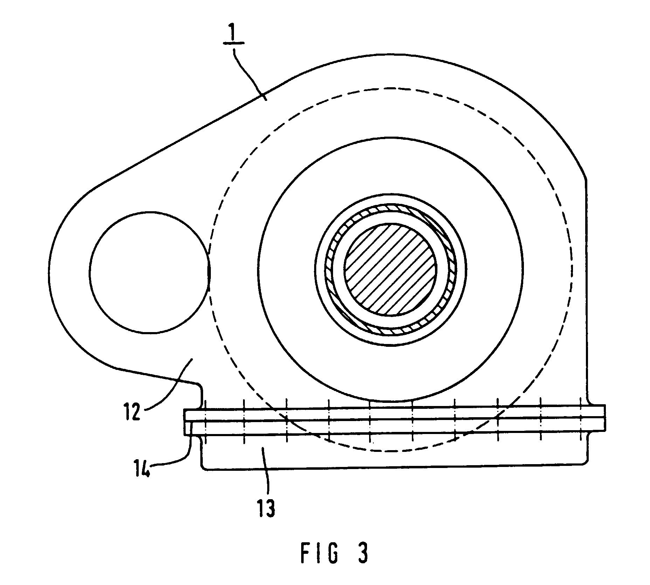

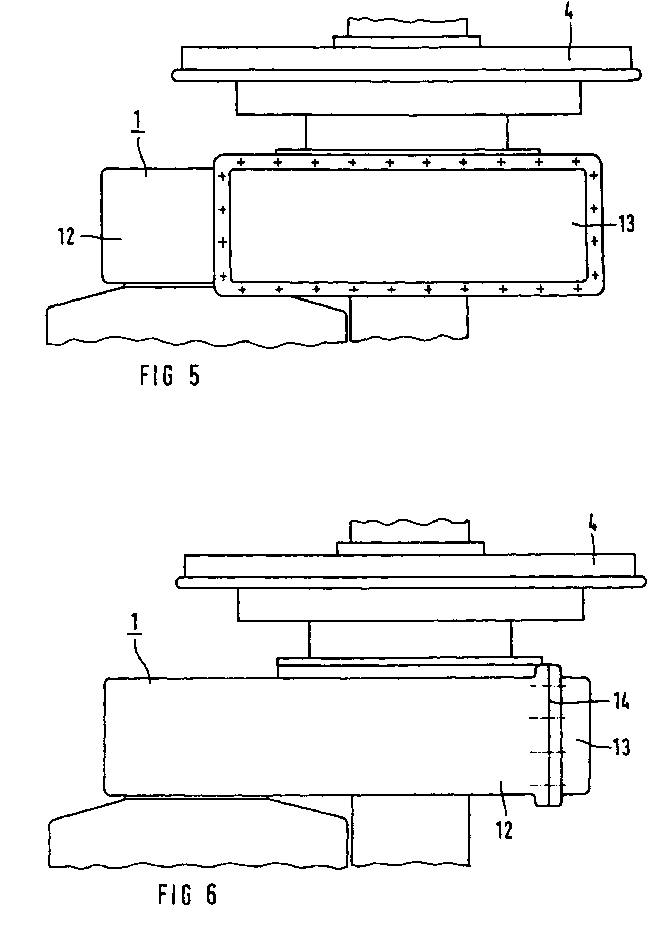

In FIG 1 bis 6 ist mit 1 ein Getriebegehäuse bezeichnet, das am Lagerschild 2 eines Antriebsmotors befestigt ist. Das Getriebegehäuse 1 umschließt eine Hohlwelle 22. Innerhalb der Hohlwelle 22 verläuft eine rotierende Radachse 3, die mit einem Treibrad 4 starr verbunden ist. Das Getriebegehäuse weist einen Großradträger 5 zur Lagerung eines Großrades 6 auf. Weiterhin befindet sich im Getriebegehäuse 1 ein mit dem Großrad 6 in Eingriff stehendes Ritzel 7, das mit der Welle 8 des Antriebsmotors starr gekoppelt ist (in FIG 1 ist nur das Lagerschild 2 des Antriebsmotors dargestellt).

Das Großrad 6 ist über seinen Großradstern 9 und eine Lenkerkupplung 10 mit dem Hohlwellenstern 11 der Hohlwelle 22 gekoppelt.

Das Getriebegehäuse 1 besteht aus zwei Gehäuseteilen 12 und 13, die an ihrer Trennfuge 14 miteinander verbunden sind. Das erste Gehäuseteil 12 ist größer als das zweite Gehäuseteil 13. In FIG 1 ist nur das erste Gehäuseteil 12 sichtbar. Die Trennfuge 14, die in FIG 1 nicht sichtbar ist, verläuft parallel zur Radachse 3 und senkrecht zum Großrad 6.

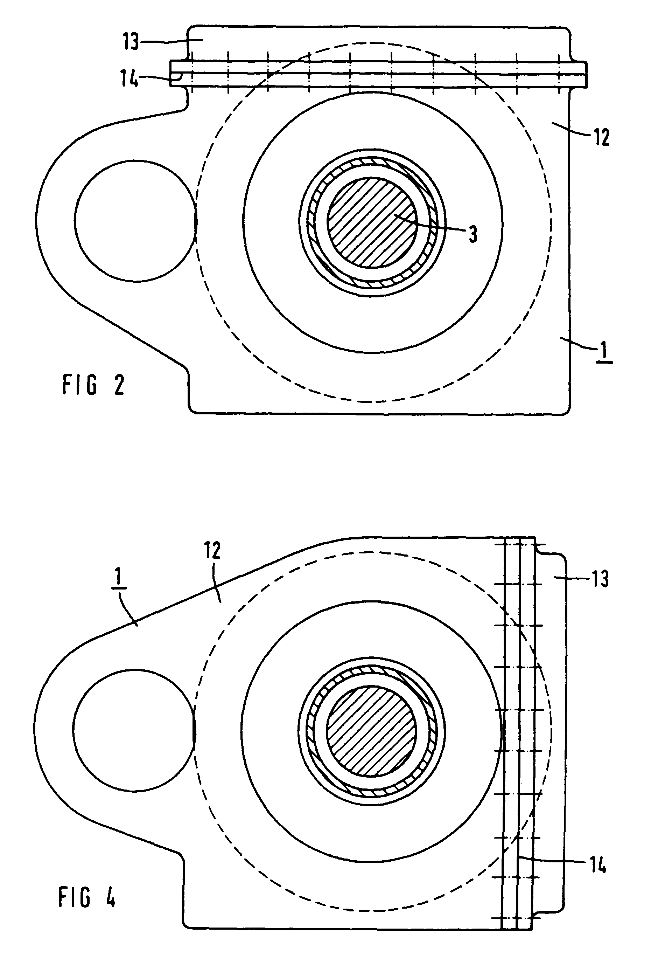

Gemäß dem Ausführungsbeispiel nach FIG 2 verläuft die Trennfuge 14 oberhalb der Radachse 3. Demgegenüber verläuft die Trennfuge 14 nach FIG 3 unterhalb der Radachse 3. Bei einer anderen Ausgestaltung verläuft die Trennfuge 14 seitlich zur Radachse 3 auf der dem Ritzel 7 abgewandten Seite.

Der erfindungsgemäße Aufbau des Getriebegehäuses 1 erlaubt eine genaue Justierung und eine einfache Montage des vormontierten Großradträgers 5 im Getriebegehäuse 1. Durch den Verlauf der Trennfuge 14 können die Flanschflächen der Trennfuge 14 sowohl nach außen als auch nach innen genügend breit gewählt werden, ohne daß Beschränkungen hinsichtlich Bodenfreiheit und/oder bezüglich des Großrades 6 auftreten.

## Patentansprüche

1. Getriebegehäuse, das zwei Gehäuseteile (12, 13) umfaßt und am Lagerschild (2) eines Antriebsmotors eines Schienenfahrzeugs befestigt ist, wobei im Getriebegehäuse (1), das eine Radachse (3) umschließt, wenigstens ein Großrad (6) drehbar gelagert ist, und die Getriebegehäuseteile (12, 13) über eine zur Radachse (3) sowie zur Drehachse des Großrades (6) parallel und zum Großrad (6) senkrecht verlaufende Trennfuge (14) miteinander verbunden sind, wobei ferner das Großrad (6) drehbar auf einem Großradträger (5) gelagert und der vormontierbare Großradträger mit dem Großrad in das Getriebegehäuse (1) einsetzbar und darin verdrehsicher gehalten ist.

2. Getriebegehäuse nach Anspruch 1,
**dadurch gekennzeichnet,**
daß die Trennfuge (14) oberhalb der Radachse (3) verläuft.

3. Getriebegehäuse nach Anspruch 1,
**dadurch gekennzeichnet,**
daß die Trennfuge (14) unterhalb der Radachse (3) verläuft.

4. Getriebegehäuse nach Anspruch 1,
**dadurch gekennzeichnet,**
daß die Trennfuge (14) seitlich zur Radachse (3) auf der dem Ritzel (7) abgewandten Seite verläuft.

5. Getriebegehäuse nach Anspruch 3,
**dadurch gekennzeichnet,**
daß das Gehäuseteil (13), welches das untere Gehäuseteil bildet, als Ölwanne vorgesehen ist.

## Claims

1. Gearbox housing, which comprises two housing portions (12, 13) and is secured to the end shield (2) of a drive motor of a rail-bound vehicle, with at least one large wheel (6) being rotatably mounted in the gearbox housing (1), which surrounds a wheel axle (3), and the gearbox housing portions (12, 13) being connected to each other by way of a parting line (14) which extends in parallel with the wheel axle (3) and also the axis of rotation of the large wheel (6) and at right angles to the large wheel (6), with the large wheel (6) furthermore being rotatably mounted on a large-wheel carrier (5) and the pre-mounted large-wheel carrier with the large wheel being able to be inserted into the gearbox housing (1) and held therein in a manner such that it is protected against torsion.

2. Gearbox housing according to claim 1, characterised in that the parting line (14) extends above the wheel axle (3).

3. Gearbox housing according to claim 1, characterised in that the parting line (14) extends beneath the wheel axle (3).

4. Gearbox housing according to claim 1, characterised in that the parting line (14) extends to the side of the wheel axle (3), on the side which faces away from the pinion (7).

5. Gearbox housing according to claim 3, characterised in that the housing portion (13) which forms the lower housing portion is provided as an oil tray.

## Revendications

1. Carter de transmission, qui comprend deux parties de carter (12, 13) et est fixé au flasque-palier (2) d'un moteur d'entraînement d'un véhicule sur rails, au moins une grande roue (6) étant montée tournante dans le carter de transmission (1) qui enveloppe un essieu (3), et les parties de carter de transmission (12, 13) étant reliées entre elles par un joint de séparation (14) s'étendant parallèlement à l'essieu (3) et à l'axe de rotation de la grande roue (6) et perpendiculairement à la grande roue (6), la grande roue (6) étant montée de manière tournante sur un porte-roue (5) et le porte-roue prémonté avec la roue pouvant être inséré dans le carter de transmission (1) et y être maintenu sans torsion.

2. Carter de transmission selon la revendication 1, caractérisé en ce que le joint de séparation (14) s'étend au-dessus de l'essieu (3).

3. Carter de transmission selon la revendication 1, caractérisé en ce que le joint de séparation (14) s'étend au-dessous de l'essieu (3).

4. Carter de transmission selon la revendication 1, caractérisé en ce que le joint de séparation (14) s'étend latéralement par rapport à l'essieu (3), sur le côté opposé au pignon (7).

5. Carter de transmission selon la revendication 3, caractérisé en ce que la partie de carter (13) formant la partie inférieure du carter est prévue comme carter d'huile.
